**Europäisches Patentamt**

**European Patent Office**

**Office européen des brevets**

(19)

(11) Numéro de publication : **0 183 589**
**B1**

(12)

# FASCICULE DE BREVET EUROPÉEN

(45) Date de publication du fascicule du brevet :
30.11.88

(51) Int. Cl.⁴ : **F 16 C   1/22**, F 16 D 13/75

(21) Numéro de dépôt : **85402138.3**

(22) Date de dépôt : **06.11.85**

(54) **Dispositif de commande mécanique à câble à réglage automatique.**

(30) Priorité : **14.11.84 FR 8417374**

(43) Date de publication de la demande :
**04.06.86 Bulletin 86/23**

(45) Mention de la délivrance du brevet :
**30.11.88 Bulletin 88/48**

(84) Etats contractants désignés :
**DE FR GB IT**

(56) Documents cités :
**EP-A- 0 055 649**
**EP-A- 0 120 616**
**WO-A-84 /011 96**
**GB-A- 2 088 502**
**US-A- 2 957 354**

(73) Titulaire : **Société des Câbles du Mans Société Anonyme**
**50, Avenue de la Libération**
**72000 Le Mans (FR)**

(72) Inventeur : **Carre, Jean-Jacques**
**59, Boulevard de l'Est**
**F-93340 Le Raincy (FR)**

(74) Mandataire : **Lewis, David Overington**
**c/o Babcock International plc 165 Great Dover Street**
**London SE1 4YA (GB)**

Jouve, 18, rue St-Denis, 75001 Paris, France

## Description

La présente invention concerne un dispositif de commande mécanique à câble à réglage automatique, notamment mais non exclusivement pour la commande d'embrayages de véhicules automobiles, destiné à être interposé entre un organe d'actionnement et un organe à actionner muni de moyens de rappel propres, du type comprenant : une longueur de câble disposée à coulissement axial dans un conduit de câble ayant une extrémité solidaire d'une première structure d'embout tubulaire agencée télescopiquement par rapport à une seconde structure d'embout tubulaire ; des premiers moyens élastiques sollicitant axialement les structures d'embouts en écartement l'une de l'autre ; et des moyens de verrouillage débrayables disposés entre les structures d'embouts et déplaçables entre une position de verrouillage, solidarisant l'une à l'autre les structures d'embouts, et une position de déverrouillage sous l'action d'un organe de commande relié au câble par une liaison à frottement.

Un dispositif de commande mécanique à réglage automatique de ce type est décrit dans le document EP-A-0 055 649. Un dispositif de ce type présente l'intérêt de conserver l'intégrité de la longueur de câble de bout en bout, entre l'organe d'actionnement et l'organe à actionner, et de permettre d'aménager les moyens de verrouillage débrayables soit en bout de conduit, soit en tout point adéquat intermédiaire du conduit, offrant ainsi une grande souplesse d'utilisation in situ en fonction de l'environnement immédiat du dispositif de commande mécanique. Dans le dispositif de ce document, l'organe de commande, relié au câble par une liaison à frottement, est solidaire des moyens de verrouillage et intervient pour amener les moyens de verrouillage en position de verrouillage lors de la mise en œuvre du dispositif, sous l'effet du déplacement du câble dans une direction, et pour débrayer les moyens de verrouillage en fin de mise en œuvre du dispositif, également sous l'effet du déplacement du câble, dans l'autre direction cette fois. Dans la pratique, ce type de dispositif de commande mécanique est amené à suivre un trajet parfois très tortueux de sorte que, en raison des contraintes internes résultantes, il peut s'en suivre que, dans certaines conditions parfois non maîtrisables, on ne puisse obtenir qu'une fonction de verrouillage imparfaite mais non « détectée » en tant que telle par l'organe de commande pouvant entraîner un débrayage non contrôlé des moyens de verrouillage.

La présente invention a pour objet de pallier ces inconvénients et de proposer un dispositif du type en question assurant un verrouillage positif entre les structures d'embouts, exempt de risques d'échappement sans nécessiter des tolérances précises de fabrication et de montage des éléments constitutifs du dispositif.

Pour ce faire, selon une caractéristique de l'invention, les moyens de verrouillage sont normalement sollicités vers leur position de verrouillage par des seconds moyens élastiques de sollicitation axiale, l'organe de commande étant mobile par rapport aux moyens de verrouillage et coopérant normalement avec ces derniers, en configuration de repos du dispositif, à l'encontre des seconds moyens élastiques de sollicitation.

Selon une caractéristique plus particulière de l'invention, les moyens de verrouillage comprennent un dispositif à coincement, les seconds moyens élastiques de sollicitation étant disposés entre le dispositif à coincement et l'une des structures d'embouts.

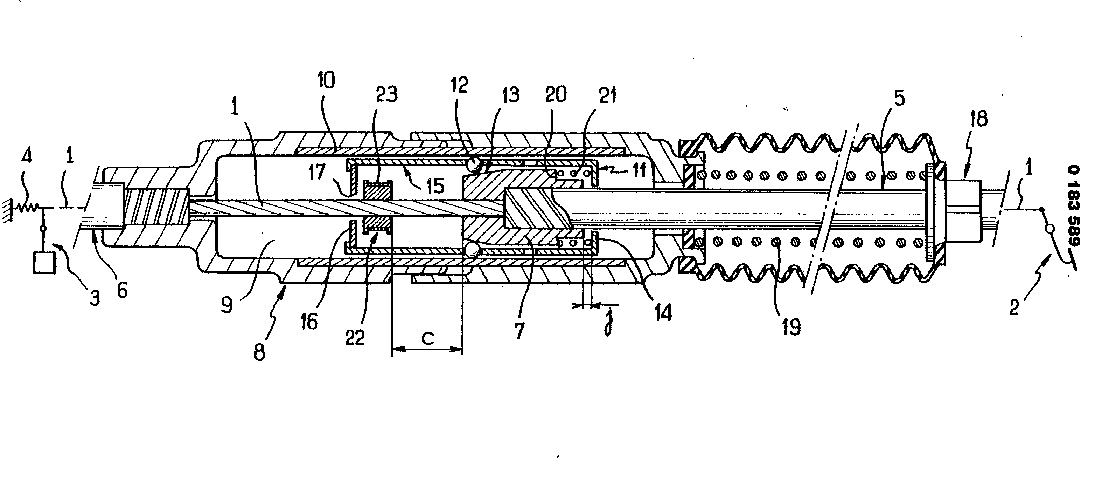

D'autres caractéristiques et avantages de la présente invention ressortiront de la description suivante d'un mode de réalisation, donné à titre illustratif mais nullement limitatif, faite en relation avec le dessin annexé, sur lequel :

- La figure unique est une vue en coupe longitudinale schématique d'un dispositif selon l'invention représenté en condition de verrouillage.

Le dispositif selon l'invention comprend une longueur de câble d'actionnement 1 s'étendant à coulissement axial dans une structure de conduit de câble, et dont les extrémités sont reliées respectivement à un organe d'actionnement, typiquement une pédale 2, et à un organe à actionner, typiquement un levier d'embrayage 3, pourvu d'un moyen de rappel propre 4. Dans le mode de réalisation représenté, le conduit de gainage du câble 1 est divisé en un premier tronçon de conduit 5 et un second tronçon de conduit 6 axialement disjoints. Dans le mode de réalisation particulier représenté, l'extrémité du premier tronçon de conduit 5 est solidarisée à une structure d'embout intérieure tubulaire massive 7 présentant un profil extérieur conique. L'extrémité adjacente du second tronçon de conduit est, quant à elle, solidarisée à une structure d'embout extérieure, désignée généralement par la référence 8, présentant une configuration tubulaire, constituée typiquement par l'assemblage de deux parties de boîtier et définissant une cavité interne 9 délimitée périphériquement par l'alésage intérieur d'une chemise métallique tubulaire 10. Entre la chemise 10 de la structure d'embout extérieure 8 et la structure d'embout intérieure 7 est disposé un dispositif de verrouillage à coincement constitué, dans le mode de réalisation représenté, d'une cage à billes 11 dans laquelle est reçue à coulissement la structure d'embout intérieure et dont les billes 12 forment une structure expansible radialement susceptible de coopérer en coincement entre la surface de rampe 13, formée par la surface extérieure conique de la structure d'embout intérieure 7, et la chemise 10. D'une façon plus spécifique, la cage à billes 11 comporte, du côté du premier tronçon de conduit 5, une cloison frontale annulaire 14 au travers de laquelle s'étend librement la zone d'extrémité du premier tronçon de conduit 5, et, à l'opposé de cette première paroi frontale annulaire 14, un prolongement tubulaire 15 sur l'extrémité libre duquel est disposée une seconde paroi frontale annulaire 16 pourvue d'un trou central 17 traversé par la portion dénudée du câble 1 et de diamètre intérieur légèrement supérieur au diamètre nominal du câble 1. Entre l'extrémité de la structure d'embout extérieure 8 opposée au second tronçon de conduit 6 et une bague de butée 18 sertie sur le premier tronçon de conduit 5 est disposé en compression un ressort hélicoïdal 19 co-axial au second tronçon de conduit 5 et sollicitant en écartement l'une de l'autre les structures d'embouts intérieure 7 et extérieure 8. Entre la première paroi frontale annulaire 14 et un épaulement annulaire en vis-à-vis 20 de la structure d'embout intérieure 7 est disposé un ressort hélicoïdal 21 co-axial au premier tronçon de conduit 5 et sollicitant normalement la cage 11 vis-à-vis de la structure d'embout intérieure 7 dans la direction amenant les billes 12 en configuration de verrouillage à coincement entre la surface de rampe 13 et la chemise 10. Dans l'espace entre l'extrémité frontale de la structure d'embout intérieure 7 et la seconde paroi annulaire frontale 16 des moyens de verrouillage 11 est disposé, autour de la portion dénudée du câble 1, un organe de commande annulaire 22, avantageusement du type à bague fendue tel que décrit dans le document EP-A-0 055 649, relié en contact de friction au câble 1 par un ressort de serrage en C 23. Le prolongement tubulaire 15 est avantageusement déterminé de façon que la distance normale c entre le frotteur 22 et la face frontale d'extrémité adjacente de la structure d'embout intérieure 7 soit supérieure à la course normale d'actionnement de l'organe à actionner 3 (c'est-à-dire, dans le cas d'un embrayage, la course d'embrayage).

Le fonctionnement du dispositif est le suivant. Au repos, le frotteur 22 est en appui contre la face intérieure de la seconde paroi frontale annulaire 17 de la cage à billes 11 dont le ressort de verrouillage 21 est comprimé sous l'action du ressort écarteur 19 dont la force est supérieure à celle du ressort de verrouillage 21, la première paroi frontale annulaire 14 étant en appui contre l'extrémité frontale adjacente de la structure d'embout intérieure 7, les moyens de verrouillage étant ainsi maintenus en configuration débrayée. Lors de la mise en oeuvre du dispositif, en enfonçant la pédale 2, le câble 1 est déplacé vers la droite sur la Figure, entraînant avec lui le frotteur 22 qui se dégage de la seconde paroi frontale annulaire 16. De ce fait, en raison de la réaction induite dans les tronçons de conduit 5 et 6 tendant à les rapprocher l'un de l'autre, le ressort de verrouillage 21 cesse d'être inhibé et peut alors permettre un déplacement relatif entre la cage 11 et la structure d'embout intérieure 7 d'une distance j amenant les billes 12 en configuration de verrouillage franc entre les deux structures d'embouts (favorisé par la réaction susmentionnée dans les tronçons de conduit). En fin de mise en oeuvre du dispositif, le câble achevant de défiler vers la gauche (sur la Figure), le frotteur 22 revient en appui contre la seconde paroi frontale annulaire 16 et, les réactions dans les tronçons de conduit 5 et 6 disparaissant, on recouvre la configuration initiale de repos avec le ressort de verrouillage comprimé 21 et les moyens de verrouillage débrayés autorisant, si besoin est, une mise à longueur automatique du dispositif.

La force de friction du frotteur 22 sur le câble 1 est en général inférieure à la force du ressort d'écartement 19 mais est supérieure à la force du ressort de verrouillage 21. Pour éviter que, dans certaines conditions, notamment sous l'effet de chocs, le frotteur puisse se déplacer accidentellement vis-à-vis du câble 1, la force de friction du frotteur 22 peut être notablement augmentée, voire rendue égale ou supérieure à la force du ressort d'écartement 19. Dans ce dernier cas, lors de la mise en longueur initiale du dispositif, il conviendra alors d'exercer entre les tronçons de conduit 5 et 6 un effort d'écartement manuel suppléant la force du ressort d'écartement 19.

En variante, pour éviter un tel déplacement accidentel du frotteur conservant une force de friction inférieure à la force du ressort 19, le dimensionnement du prolongement tubulaire 15 est choisi de façon que le jeu fonctionnel c du frotteur 22 soit légèrement inférieur à la course d'actionnement normal de l'organe à actionner 3, de sorte que, par venue en butée contre la structure d'embout intérieure 7 lors d'un plein actionnement du dispositif, le frotteur, ayant été déplacé de façon intempestive, recouvre sensiblement sa position de référence antérieure sur le câble 1.

Quoique la présente invention ait été décrite en relation avec un mode de réalisation particulier, elle ne s'en trouve pas limitée mais est au contraire susceptible de modifications et de variantes qui apparaîtront à l'homme de l'art. En particulier, le dispositif de coincement à structure expansible radialement peut être constitué, en place et lieu d'un système à cage à billes, par une cage à mâchoires élastiques tel que décrit par exemple dans le document FR-A-2 420 164, les surfaces adjacentes des structures d'embouts 7 et 8 étant aménagées en conséquence. D'autre part, selon les possibilités d'installation in situ, la structure d'embout extérieure 8 peut être montée dans une structure stationnaire voisine de l'organe à actionner 3, par exemple dans un bossage de boîtier d'embrayage.

## Revendications

1. Dispositif de commande mécanique à câble, destiné à être interposé entre un organe d'actionnement (2) et un organe à actionner (3) muni d'un moyen de rappel (4), du type comprenant : une longueur de câble (1) disposée à coulissement axial dans un conduit de câble (5) ayant une extrémité solidaire d'une première structure d'embout tubulaire (7) agencée télescopiquement par rapport à une seconde structure d'embout (8) ; des premiers moyens élastiques (19) sollicitant axialement les structures d'embouts (7, 8) en écartement l'une de l'autre ; et des moyens de verrouillage débrayables (11, 12) disposés entre les structures d'embouts (7, 8) et déplaçables entre une position de verrouillage, solidarisant l'une à l'autre les structures d'embouts, et une position de déverrouillage sous l'action d'un organe de commande (22) relié au câble (1) par une liaison à frottement, caractérisé en ce que les moyens de verrouillage (11, 12) sont normalement sollicités vers leur position de verrouillage par des seconds moyens élastiques de sollicitation axiale (21), l'organe de commande (22) étant mobile par rapport aux moyens de verrouillage (11, 12) et coopérant normalement avec ces derniers, en configuration de repos du dispositif, à l'encontre des seconds moyens élastiques (21).

2. Dispositif selon la revendication 1, caractérisé en ce que les moyens de verrouillage comprennent un dispositif à coincement (11, 12) et en ce que les seconds moyens élastiques de sollicitation (21) sont disposés entre le dispositif à coincement et l'une (7) des structures d'embouts (7, 8).

3. Dispositif selon la revendication 2, caractérisé en ce que le dispositif à coincement (11, 12) comprend une partie de prolongement (15) entourant le câble (1) et comportant une paroi frontale (16) agencée pour coopérer en engagement avec l'organe de commande (22).

4. Dispositif selon la revendication 3, caractérisé en ce que le dispositif à coincement (11, 12) comprend une structure expansible radialement (12) coopérant avec des surfaces de rampe (13) formées sur l'une (7) des structures d'embouts (7, 8).

5. Dispositif selon la revendication 4, caractérisé en ce que les surfaces de rampe (13) sont formées sur la première structure d'embout (7), les seconds moyens élastiques de sollicitation (21) étant disposés entre cette première structure d'embout (7) et une zone d'appui frontale annulaire (14) du dispositif à coincement (11, 12) coaxiale au conduit (5).

6. Dispositif selon la revendication 5, caractérisé en ce que le dispositif à coincement comprend une cage (11) porte-billes (12) disposée dans la seconde structure d'embout (8) et dans laquelle est reçue la première structure d'embout (7), ladite zone d'appui frontale annulaire (14) et la partie de prolongement (15) étant solidaires de la cage (11).

7. Dispositif selon la revendication 6, caractérisé en ce que l'organe de commande (22) est disposé dans la partie de prolongement (15) de la cage (11).

8. Dispositif selon l'une des revendications précédentes, caractérisé en ce que le conduit de câble est divisé en un premier (5) et un second (6) tronçons de conduit ayant des extrémités adjacentes axialement séparées et solidarisées respectivement aux première et seconde structures d'embouts (7, 8).

9. Dispositif selon la revendication 8, caractérisé en ce que les premiers moyens élastiques (19) sont disposés entre l'extrémité de la seconde structure d'embout (8) opposée au second tronçon de conduit (6) et une partie d'appui (18) solidarisée au premier tronçon de conduit (5).

**Claims**

1. A mechanical control by cable, intended to be interposed between an actuating component (2) and a component to be actuated (3) provided with a return means (4), of the type comprising : a length of cable (1) arranged so as to slide axially inside a cable conduit (5) havone one end secured to a first tubular ferrule arrangement (7) arranged telescopically in a second tubular ferrule arrangement (8) ; first resilient means (19) biasing said ferrule arrangements (7, 8) axially away from one another ; and releasable locking means (11, 12) arranged between said ferrule arrangements (7, 8) and displaceable between a locking position, firmly coupling the ferrule arrangements and an unlocked position under the action of a control member (22) frictionally engaging said cable (1), characterized in that said locking means (11, 12) are normally biased towards their locking position by second axially acting resilient means (21), said control member (22) being movable relative to said locking means (11, 12) and normally cooperating with the latter, in a rest configuration of the mechanical control, against said second resilient means (21).

2. A control according to claim 1, charaterized in that said locking means comprise a jamming device (11, 12) and in the said second resilient means (21) are arranged between said jamming device and one (7) of said ferrule arrangements (7, 8).

3. A control according to claim 2, characterized in that said jamming device (11, 12) comprises an extension portion (15) surrounding said cable (1) and having a front wall (16) arranged to cooperate in engagement with said control member (22).

4. A control according to claim 3, characterized in that said jamming device (11, 12) incorporates a radially expandable arrangement (12) cooperating with ramp surfaces (13) formed on one (7) of said ferrule arrangements (7, 8).

5. A control according to claim 4, characterized in that said ramp surfaces (13) are formed on said ferrule arrangement (7), said second resilient means (21) being positioned between said ferrule arrangement (7) and an annular front bearing zone (14) of said jamming device (11, 12) which is coaxial with said conduit.

6. A control according to claim 5, characterized in that said jamming device comprises a cage (11) to carry balls (12) and arranged in the second ferrule structure (8) and in which the first ferrule structure (7) is housed the said annular bearing zone (14) and the extension portion (15) being firmly fixed to the said cage (11).

7. A control according to claim 6, characterized in that said control member (22) is housed within said extension portion (15) of said cage (11).

8. A control according to any of the preceding claims, characterized in that said cable conduit is divided in first (5) and second (6) conduit portions having axially spaced adjacent ends connected respectively to said first and second (7, 8) ferrule arrangements.

9. A control according to claim 8, characterized in that said first resilient means (19) are positioned axially between one end of said second ferrule arrangement (8) remote from said second conduit portion (6) and a bearing portion (18) firmly fixed to said first conduit portion (5).

**Patentansprüche**

1. Mechanische Antriebseinrichtung durch Kabel (Kabelzug), der zwischen einem betätigenden Bauteil (2) und einem zu betätigenden, mit einer Rückholeinrichtung (4) versehenen Bauteil (3) zu fügen ist, mit folgenden Merkmalen : ein Kabelstück (1) ist axial verschieblich in einer Kabelhülle (5) angeordnet, deren eines Ende mit einer ersten rohrförmigen Hohlstruktur (7) fest verbunden ist, die teleskopisch mit Bezug auf eine zweite Hohlstruktur (8) angeordnet ist ; eine erste Federrichtung (19) drängt die Hohlstrukturen (7, 8) voneinander weg ; eine ausrückbare Verriegelungseinrichtung (11, 12) ist zwischen den Hohlstrukturen (7, 8) angeordnet und infolge eines mit dem Kabel (1) durch Reibeingriff verbundenen Steuerorgans (22) zwischen einer Verriegelungsstellung, in welcher die Hohlstrukturen fest miteinander verbunden werden, und einer Entriegelungsstellung verschiebbar, dadurch gekennzeichnet, daß die Verriegelungseinrichtung normalerweise in ihrer Verriegelungsstellung durch eine zweite, axial wirkende Federeinrichtung (21) vorgespannt ist, und daß das Steuerorgan (22) mit Bezug auf die Verriegelungseinrichtung (11, 12) beweglich angeordnet ist und normalerweise mit dieser Verriegelungseinrichtung in einer Ruhestellung des Kabelzugs gegen die Vorspannung der zweiten Federeinrichtung (21) zusammenarbeitet.

2. Kabelzug nach Anspruch 1, dadurch gekennzeichnet, daß die Verriegelungseinrichtung eine Klemmeinrichtung (11, 12) umfaßt und daß die zweite Vorspannungs-Federeinrichtung (21) zwischen der Klemmeinrichtung und einer (7) der Hohlstrukturen (7, 8) angeordnet ist.

3. Kabelzug nach Anspruch 2, dadurch gekennzeichnet, daß die Klemmeinrichtung (11, 12) ein das Kabel (1) umgebendes Verlängerungsteil (15) und eine Stirnwand (16) aufweist, die zur Zusammenarbeit mit dem Steuerorgan (22) angeordnet ist.

4. Kabelzug nach Anspruch 3, dadurch gekennzeichnet, daß die Klemmeinrichtung (11, 12) eine radial ausdehnbare Struktur (12) aufweist, die mit Schrägflächen (13) auf einer (7) der Hohlstrukturen (7, 8) zusammenarbeitet.

5. Kabelzug nach Anspruch 4, dadurch gekennzeichnet, daß die Schrägflächen (13) auf der ersten Hohlstruktur (7) gebildet sind und daß die zweite Vorspannungsfedereinrichtung (21) zwischen der ersten Hohlstruktur (7) und einem ringförmigen, zur Hülle (5) koaxialen Stirnwand-Abstützbereich (14) der Klemmeinrichtung (11, 12) angeordnet ist.

6. Kabelzug nach Anspruch 5, dadurch gekennzeichnet, daß die Klemmeinrichtung einen Käfig (11) mit darin geführten Kugeln (12) Aufweist, der in der zweiten Hohlstruktur (8) angeordnet ist und in welchem die erste Hohlstruktur (7) aufgenommen wird, und daß der ringförmige Stirnwand-Abstützbereich (14) und das Verlängerungsteil (15) mit dem Käfig (11) fest verbunden sind.

7. Kabelzug nach Anspruch 6, dadurch gekennzeichnet, daß das Steuerorgan (22) in dem Verlängerungsteil (15) des Käfigs (11) angeordnet ist.

8. Kabelzug nach einem der vorhergehenden Ansprüche, dadurch gekennzeichnet, daß die Kabelhülle in einen ersten (5) und zweiten (6) Abschnitt unterteilt ist, deren benachbarte Enden axial voneinander getrennt sind und jeweils mit der ersten bzw. zweiten Hohlstruktur (7, 8) verbunden sind.

9. Kabelzug nach Anspruch 8, dadurch gekennzeichnet, daß die erste Federeinrichtung (19) zwischen dem Ende der zweiten Hohlstruktur (8) - gegenüber dem zweiten Hüllenabschnitt (6) - und einem zweiten, mit dem ersten Hüllenabschnitt (5) fest verbundenen Abstützteil (18) angeordnet ist.

0 183 589